# EUROPEAN PATENT SPECIFICATION

(11) **EP 4 242 712 B1**
(45) Date of publication and mention of the grant of the patent: **03.12.2025**
(21) Application number: 22161412.6
(22) Date of filing: 10.03.2022
(51) Int. Cl.: G02B 6/38, G02B 6/40

(54) **A TRANSMISSION CONNECTOR DEVICE, A TRANSMISSION CONNECTOR AND A SYSTEM**
ÜBERTRAGUNGSVERBINDERVORRICHTUNG, ÜBERTRAGUNGSVERBINDER UND SYSTEM
DISPOSITIF DE CONNECTEUR DE TRANSMISSION, UN CONNECTEUR DE TRANSMISSION ET UN SYSTÈME

(43) Date of publication of application: 13.09.2023
(73) Proprietor: Reichle & De-Massari AG, 8620 Wetzikon (CH)
(72) Inventor: Zidarova, Nadejda, 1574 Sofia (BG)
(74) Representative: Daub, Thomas

(56) References cited:
- US-A1- 2015 303 620
- US-A1- 2020 069 855
- US-A1- 2020 116 950

## Description

### State of the art

The invention relates to a transmission connector device according to claim 1, a transmission connector according to claim 19 and a system according to claim 20.

From the state of the art, fiber optical plug connector devices comprising an actuation unit and a latching unit are known, wherein the latching unit is embodied as a snap-in unit having snap hitches for an intended snap-in connection between at least the actuation unit and a plug-in housing.

The prior art publication US 2020/116950 A1 discloses a fiber optic assembly configured to blind mate opposing fiber optic connectors.

The objective of the invention is, in particular, to provide a transmission connector device with improved characteristics regarding a fixation and/or releasement mechanism, comfort and/or construction. The objective is achieved, according to the invention, by the features of independent claim 1, while advantageous implementations and further developments of the invention may be gathered from the dependent claims.

### Advantages of the invention

The invention is based on transmission connector device comprising an actuation unit for actuating a latching unit by pulling along an axial direction and thereby transferring the latching unit from a latch position into a release position.

It is proposed that the latching unit comprises an at least partially ring-shaped spring element.

By means of the invention an enhanced fixation and releasement mechanism, construction and/or a higher comfort can be achieved. Preferably, a flexible mechanism for fixing and for releasing a transmission connector device can be achieved. In particular, an improved releasement mechanism for releasing a connection between the transmission connector device and a cooperating unit, for example an adapter unit can be achieved. Moreover, a compact design can be achieved. This allows achieving a particularly user-friendly and easy-to use latching unit which can be preferably latched and released without additional tools. Due to a spring element the latching unit can be quickly and easily released. Additionally, the latching unit can also be quickly and easily latched. Furthermore, a handling can be simplified. In addition, a fixation of the transmission connector device in particular with a cooperating unit, preferably an adapter unit, can be optimized and made more secure. Thereby, a higher user and/or installer comfort can be achieved. Further, a transmission connector device can be provided for use in a harsh environment.

The transmission connector device can be part of a transmission connector. The transmission connector device can be a subassembly of the transmission connector or can be embodied as the whole transmission connector. The transmission connector device can be embodied as a data transmission connector device and/or a power transmission connector device. Further, the transmission connector device can be an optical connector device, especially an optical fiber connector device. Preferably, the transmission connector device is a connector device for small, simple and/or multi-fiber fibers. For example, the transmission connector device can be a LC, advantageously a LC-D, SC, MPO and/or MTP connector device. Accordingly, to the transmission connector device, the transmission connector can be embodied as a data transmission connector and/or a power transmission connector. Further, the transmission connector can be an optical connector, especially an optical fiber connector. Preferably, the transmission connector is a connector device for small, simple and/or multi-fiber fibers. For example, the transmission connector can be a LC, advantageously a LC-D, SC, MPO and/or MTP connector. Preferably, the transmission connector device, in particular the transmission connector, is intended to a use/to be used in a harsh environment.

In particular the transmission connector, preferably the transmission connector device, is a plug connector, in particular a plug connector device. The transmission connector device can be part of a system. In particular, the system is a transmission system for data and/or power. Preferably, the system can be an optical fiber system. Preferably, the whole system is intended to a use/to be used in the harsh environment. The system can comprise a cooperating unit for connecting with the transmission connector device, wherein the cooperating unit having at least one recess for receiving at least part of the latching unit.

Particularly preferably, the cooperating unit is embodied as an adapter unit. The adapter unit can be configured for connecting the transmission connector device with at least one further transmission connector device, for example one further data and/or power transmission connector device. At least the further transmission connector device can be part of the system. Advantageously, the cooperating unit is intended to establish at least a safe and/or secure connection between the transmission connector device with the further transmission connector device. Particularly preferably, the cooperating unit is intended to the at least safe and/or secure connection in the harsh environment.

The actuation unit is configured for actuating the latching unit and thereby transferring the latching unit from a latch position into the release position. In particular, the latching unit is configured to provide a latching mechanism. Advantageously, the latching unit is configured for a reversible, preferably non-destructive, releasing and/or latching. In this context, the "latch position" is to be understood as a position, in which the latching unit latches the transmission connector device with the cooperating unit. In particular, if the latching unit is in the latch position, the transmission connector device is in a connected position with the cooperating unit. Under a "release position" a position is to be understood, in this context, in which the latch between the transmission connector device and the cooperating unit is released. In particular, in the release position the latching unit is deformed so that the latch is released.

By "pulling the actuation unit along the axial direction" can be understood that a user and/or installer pulls the actuation unit itself along the axial direction. Alternatively, and preferably in this context, it should be understood that the user and/or installer pulls another unit and/or element of the transmission connector device which is connected to the actuation unit and pulls thereby the actuation unit along the axial direction.

Preferably, the latching unit, in particular the spring element, cooperates with the recess of the cooperation unit for latching the transmission connector device with the cooperation unit. In the latch position the latching unit can receive at least partially in the recess. The latching unit can snap at least partially into the recess in the latch position. The cooperating unit can have more than one recess, for example at least two recesses and preferably three recesses. The latching unit can be intended for snap-in in particular simultaneously in all recesses of the cooperating unit, in particular at least the three recesses of the cooperating unit. Advantageously, by pulling the actuation unit along the axial direction the latching unit can be released in particular simultaneously from all recesses of the cooperating unit, in particular from at least the three recesses of the cooperating unit.

The at least partially ring-shaped spring element is to be understood, in this context, as an elastic element that stores mechanical energy. In the present case, the "spring element" is an element which can be repeatedly deformed without the element being mechanically damaged or destroyed and which, in particular, automatically returns to a basic shape after deformation. In particular, the spring element is flexible and/or elastic. Advantageously, the spring element is an elastic, in particular a spring-elastic, element. The at least partially ring-shaped spring element can be at least 20 %, in particular at least 40 %, advantageously 60 % and preferably at least 80 %, ring-shaped in a circumferential direction of the spring element. Advantageously, the ring-shaped element is completely ring-shaped in the circumferential direction. In particular the at least partially ring-shaped spring element differs from coil springs and is differently formed to a coil spring.

The spring element can be made at least partially or to a great part or completely from a mineral and/or a plastic and/or a metal, in particular spring steel or a stainless steel. The phrasing "to a great part" should be understood in this context to mean, for example, at least 55 %, advantageously at least 65 %, preferably at least 75 %, particularly preferably at least 85 % and especially advantageously at most 95 % of a volume and/or mass component of an object.

In this context, "configured" and/or "intended" is to mean specifically programmed, designed and/or equipped. By an object being configured and/or intended for a certain function, it is to be understood that the object fulfills and/or implements this certain function in at least one application state and/or operating state.

Further, it is proposed that the spring element is embodied as a wire clip. In this way, a compact, narrow and/or efficient construction and/or design of at least a spring element, in particular a latching unit, can be provided. Additionally, a fixation can be further improved.

Preferably, the spring element is made in a one-piece embodiment. By "made in a one-piece embodiment" is to mean, connected at least by substance-to-substance bond, for example by a welding process, a gluing process, an injection-molding process, and/or another process that is deemed expedient by someone skilled in the art and/or advantageously formed in one piece, like for example by a production from a cast and/or by a production in a one-component or multi-component injection-molding procedure, and advantageously from a single blank. In particular, the spring element is symmetrical with respect to a symmetry plane. It can be possible, that the wire clip is closed.

Advantageously, the spring element is embodied as a C-shaped wire clip. Thereby, a compact, narrow and/or efficient construction and/or design of at least a spring element, in particular a latching unit, can be further provided. Moreover, a handling can be optimized. Since, the proposed C-shape wire clip has only one opening, a user-friendly and easy-to use latching unit can be achieved, which can be preferably latched and released without additional tools. Furthermore, an efficient, in terms of product and/or manufacturing and/or cost efficiency, can be increased.,

In particular, the spring element has only one opening. The phrasing "embodied as a C-shaped wire clip" is to mean, in this context, that the shape of the spring element has an approximately C-shaped form which resembles at least 50 %, in particular at least 70 % and preferably at least 90 % of a typical C-shape. It could be conceivable that the shape of the C-shaped wire clip corresponds exactly, in particular to 100 %, to a C-shape. The spring element may have concave hollows in his shape, in particular the C-shape, along the circumferential direction. It can be possible, that the spring element has at least two, preferably three, concave hollows in the shape, in particular the C-shape.

For the purpose of improving a fixation of a latching unit and/or a compact and/or efficient construction and/or design of a transmission connector device, it is proposed, that the transmission connector device comprises a holding unit for holding the latching unit with respect to the axial direction in relation to the actuation unit.

The holding unit is in particular configured for holding the latching unit, in particular the spring element, on one side opposite to the actuation unit. The holding unit and the actuation unit can hold the latching unit at least in sections on opposite sides of the latching unit. Advantageously, the holding unit holds the latching unit in the latch position and at least in the release position.

Preferably, the holding unit comprises at least one hole which is configured for receiving the latching unit, in particular the spring element. The holding unit can comprise several holes, in particular at least two holes in a circumferential direction of the holding unit. Advantageously, the holding unit has three holes for receiving the spring element at least in sections. Particularly preferably, the concave hollow of the spring element is arrangeable in the hole. In the latch position the latching unit can extend through the hole and be inserted in the recess of the cooperating unit. Advantageously, the holding unit is made in a one-piece embodiment. The holding unit can be made at least partially or to a great part or completely from a mineral and/or a metal and/or preferably a plastic.

Moreover, it is proposed, that the actuation unit comprises at least one channel, in which the latching unit is partially arranged, and an actuation element, which at least partially delimits the channel. In this way, a connection, preferably a fixation, of a latching unit with an actuation element can be optimized. In addition, an unintentional detachment of the latching unit in particular from at least the actuation unit can be prevented. Thereby, a security and/or comfort for a user and/or installer can be improved. Additionally, a compact and/or efficient construction and/or design can be provided.

The actuation unit can comprise several channels, in particular at least two channels in a circumferential direction of the actuation unit. Preferably, the actuation unit comprises three channels, in which the latching unit, in particular the spring element, is partially arranged. Particularly preferably the channels are embodied identical to each other. The holding unit can hold the latching unit with respect to the axial direction in relation to the actuation element. The holding unit and the actuation element can hold the latching unit, in particular the spring element, at least in sections on opposite sides of the latching unit. The holding unit and the actuation element can be arranged on opposite sides of the latching unit. Advantageously, in circumferential direction of the actuation unit the channel and the holding unit are arranged side-by-side. Preferably, in the circumferential direction of the actuation unit the channels and the holding unit are arranged in alternation. In the circumferential direction of the actuation unit there can be at least two areas, preferably at least three areas, in which the holding unit holds the latching unit with respect to the axial direction. In particular, the three channels and the holding unit are arranged in alternation.

Further, the three channels and the three areas can be arranged in alternation in the circumferential direction of the actuation unit.

According to the invention, the actuating unit comprises at least one guiding element which is configured to stretch the latching unit by pulling the actuation unit. In this way, a simple and efficient releasing of a latching unit can be provided. Further, this allows achieving a particularly user-friendly and easy-to use latching unit which can be released without additional tools. Thereby, a comfort for a user and/or installer can be optimized.

Preferably, the latching unit is stretchable without additional tools. The guiding element can be intended for stretching the latching unit and growing a diameter of the latching unit for the at least 5 %, in particular at least 10 % and advantageously at least 20 %. Additionally, it is proposed that the guiding element is movable at least partially under the latching unit by pulling the actuating unit. In this way, a releasement mechanism can be further improved, wherein a simple and efficient releasing of a latching unit can be provided. Furthermore, a handling can be simplified. Moreover, a compact design can be achieved.

In particular by pulling the actuation unit the guiding element is movable at least partially under the latching unit and thereby stretches the latching unit, in particular the spring element. By stretching the latching unit, the connection between the transmission connector device and the cooperating can be released. Preferably, in the release position the latching unit is at least partially stretched. Particularly preferably, in the release position the guiding element is at least partially arranged under the latching unit. The actuation element and/or the guiding element can be made at least partially or to a great part or completely from a mineral and/or a metal and/or preferably a plastic. Advantageously, the actuation element and the guiding element are made in a one-piece embodiment. Particularly preferably, the actuation unit is made in a one-piece embodiment.

For the purpose of improving a compact design and/or fixation of a latching unit, it is proposed that the guiding element at least partially delimits the channel. The guiding element can be intended for holding the latching unit in the channel at least in the latch position. Advantageously, the guiding element and the actuation element hold the latching unit, in particular the spring element, in the channel at least in sections on opposite sides of the latching unit. In particular, the actuation element and the guiding element are arranged on opposite sides of the channel for delimiting the channel. The actuating unit can comprise more than one guiding element, namely at least two guiding elements. Preferably, the actuating unit comprises at least three guiding elements. The actuating unit can have as many guiding elements as it comprises channels.

In another aspect of the invention, which can in particular be considered in combination with as well as separately from other aspects of the invention, it is proposed that the transmission connector device comprises a looking unit for locking the actuation unit in a locked position and for preventing actuation of the actuation unit in the locked position. In this way, a fixation mechanism and a construction can be improved. Due to a locking unit a locking mechanism additional to a latching mechanism provided by a latching unit can be provided. Further a security and thereby, a comfort can be increased. Additionally, a secure connection between a transmission connector device and at least a cooperating unit, preferably an adapter unit, and/or a further transmission connector device can be achieved. Moreover, a transmission connector device can be provided for use in a harsh environment, wherein the provided transmission connector device is capable of handling the high requirements in the environment.

The locking unit is configured to provide an additional locking mechanism for preventing actuation of the actuation unit besides the latching mechanism provided by the latching unit. In particular, the locking mechanism is intended for supporting the latching mechanism, preferably if the latching unit is in the latch position and the actuation unit is in the locked position. The locking unit can lock the actuation unit when the transmission connector device is in the connected position with the cooperating unit. The locking unit can lock the actuation unit when the latching unit is in the latch position. Preferably, the locking unit is operable without additional tools.

For the purpose of improving a fixation and/or locking, it is proposed that the locking unit prevents a relative movement of the actuation unit along the axial direction. The relative movement of the actuation unit can be a movement substantially parallel to the axial direction. The term "substantially parallel" is to mean an orientation of a direction relative to a reference direction, in particular the axial direction, wherein the direction relative to the reference direction has a deviation smaller than 8°, advantageously smaller than 5° and especially advantageously smaller than 2°. In particular, the locking unit prevents pulling at least the actuation unit along the axial direction. Additionally, the locking unit can prevent a rotating of at least the actuation unit. The locking unit can also prevent a relative movement of further elements and/or units of the transmission connector device along the axial direction.

Preferably, the locking unit comprises an operating element which is rotatable for transferring the actuation unit from the locked position into an unlocked position. Thereby, a particularly user-friendly and easy-handling unlocking of at least an actuation unit can be achieved. Due to an operating element the actuation unit can be preferably locked and unlocked without additional tools. In that way, a comfort can be improved and/or a compact and/or efficient construction of a transmission connector device can be provided.

By operating the operating element at least one further element of the transmission connector device can be moved and/or actuated and/or operated. Preferably, the operating element is used in the locking mechanism and the latching mechanism. The operating element can be used for transferring the latching unit from the latch position into the release position. Particularly preferably, the operating element is pullable along the axial direction for actuating, preferably for pulling, the actuation unit. By pulling the operating element along the axial direction, the actuation unit can also be movable and/or actuated along the axial direction.

For improving a releasement mechanism and a construction, it is proposed that in the locked position the operating element is connected to the holding unit with respect to the axial direction. Thereby, an improved interaction between an operating element and a holding unit, and preferably an actuation unit, can be achieved. Moreover, the releasement mechanism and advantageously a fixation mechanism can be simplified and made more user-friendly. Furthermore, a higher comfort can be achieved.

The operating element may be connected to holding unit by a force-fit and/or form-fit and/or adhesive-bond connection. The operating element can be fixed to the holding unit. For example, the operating element can be latched and/or snaped with the holing unit. Alternatively, the operating element can only contact the holding unit, without being fixed to the holding unit.

In one possible embodiment of the invention, it is proposed that the transmission connector device comprises a cable boot unit, which at least partially forms the operating element. Thereby, a particularly user-friendly and easy-handling locking and/or unlocking of at least an actuation unit can be achieved. Due to a cable boot unit which at least partially forms an operating element, a comfort can be improved and/or a compact and/or simple and/or efficient construction of a transmission connector device can be provided. In particular, the cable boot unit is configured for protecting a cable from bending and/or kinking.

For the purpose of improving a construction and/or a fixation and/or releasement mechanism, it is proposed that the cable boot unit is fixed to the actuation unit with respect to the axial direction, in particular in at least the unlocked position. The cable boot unit can be fixed to the actuation unit by a force-fit and/or form-fit and/or adhesive-bond connection. The actuation unit can comprise at least one bar-shaped element, which extends only partially along the circumferential direction of the actuation unit. The bar-shaped element can extend for at least 5 %, in particular for at least 10 %, and advantageously at least 20 % along the circumferential direction of the actuation unit. Preferably, the actuation unit comprises at least two bar-shaped elements, which extend only partially along the circumferential direction of the actuation unit. Particularly preferably, the actuation element comprises at least the bar-shaped element.

The cable boot unit can be fixed to the holding unit by a force-fit and/or form-fit and/or adhesive-bond connection. Preferably, the cable boot unit is snaped with the holding unit, in particular for locking the actuation unit. The cable boot unit can comprise at least one fixating arm. In particular the fixating arm can be configured for at least a fixation with the holding unit. Advantageously, the fixating arm is snaped with the holding unit in the locked position.

For transferring the actuation unit from the locked position into the unlocked position the cable boot unit can be rotatable and thereby, releasing a fixation with the folding unit. The cable boot unit can be fixed to the holding unit in a fixed position. In an unfixed position the cable boot unit can be pullable along the axial direction for actuating the actuation unit. In at least the unlocked position the fixating arm can contact the bar-shaped element. In particular, the fixating arm rests against the bar-shaped element viewed along the axial direction. By pulling the cable boot unit, the fixating arm can push against the bar-shaped element and thereby the actuation unit can be moved and/or actuated also along the axial direction.

Further, it is proposed that the transmission connector device comprises an elastic element for preferably automatically transferring back at least the actuation unit from the unlocked position into the locked position. Thereby, a high comfort can be provided. Moreover, a particularly user-friendly and easy-handling construction for locking and unlocking of at least an actuation unit can be achieved. Furthermore, an automatic locking mechanism can be provided. Due to the spring element at least the actuation unit can be locked without additional tools. In that way, a compact and/or efficient construction of a transmission connector device can be provided.

In particular, if the operating element, preferably the cable boot unit, is released by the user and/or installer, due to the elastic element at least the actuation is preferably automatically transferred back from the unlocked position into the locked position. The spring element can be stretchable, in particular if the operating element is pulled along the axial direction. The elastic element can be connected, in particular fixed, to the holding unit by a force-fit and/or form-fit and/or adhesive-bond connection. Advantageously, the elastic element is snaped with the holding unit. Preferably, this fixation between the holding unit and the elastic element exists in the locked position and unlocked position of the actuation unit.

Furthermore, it is also proposed that the elastic element is also intended for preferably automatically transferring the latching unit into a rest position. By such a design/construction of a locking unit, preferably an elastic element, an efficiency and/or a comfort can be further increased. Thereby, a high comfort can be provided. Moreover, a particularly user-friendly and easy-handling construction for locking and unlocking of at least an actuation unit can be achieved. Preferably, the latching unit is in the rest position in a same position/orientation as in the latch position relative to the actuation unit, wherein in particular the latching unit is free of contact with the cooperation unit in the rest position. In particular, after pulling the operating element along the axial direction the user and/or installer can unhand the operating element and due to the spring element, the actuation unit and/or the latching unit is automatically transferred back.

In another possible embodiment of the invention, it is proposed that the actuation unit comprises at least one abutment element, which in the locked position abuts against the operating element thereby preventing actuation of the actuation unit. Thereby, a simple, efficient and/or compact construction can be provided. Furthermore, a fixation mechanism, preferably a locking mechanism, can be improved. The actuating element and the abutment element can be made in a one-piece embodiment. The actuation unit can have more than one abutment element. Preferably the actuation unit comprises at least two abutment elements.

Moreover, it is proposed that the abutment element is embodied as an annex which extends only partially along a circumferential direction of the actuation unit. In that way, a compact and/or efficient construction of a transmission connector device can be provided. In particular, by the circumferential direction of the actuation unit is meant the previously mentioned circumferential direction of the actuation unit. The abutment element that is embodied as an annex can extend for at least 5 %, in particular for at least 10 %, and advantageously at least 20 % along the circumferential direction of the actuation unit. Preferably, the abutment element extends over at most 40 %, in particular at most 50 %, along the circumferential direction of the actuation unit.

For improving a releasement mechanism, preferably an unlocking mechanism, and/or a handling for a user and/or installer, it is proposed that the locking unit comprises at least one recess, into which the abutment element is moveable when actuating the actuation unit. In that case, the user and/or installer can pull the actuation unit itself, in particular which is in the unlocked position, along the axial direction for transferring the latching unit of the transmission connector device from a latch position into a release position. In the unlocked position by pulling the actuation unit along the axial direction, the abutment element is movable into the recess.

Preferably, the locking unit comprises a guidance element for guiding the user and/or installer regarding locking and/or unlocking of the actuation unit. Possibly, the locking unit, preferably the guiding element, can comprise some arrows for visual guiding the user and/or installer. Alternatively and/or additionally the locking unit can give the user and/or installer an acoustic feedback. The actuation unit can comprise at least one guidance rail, in which the guidance element is inserted for guiding the user and/or installer regarding locking and/or unlocking of the actuation unit. By rotation the operating element, the guidance element can also be movable and/or rotatable along the guidance rail.

Herein the transmission connector device and/or the transmission connector and/or the system is/are not to be limited to the application and implementation described above. In particular, for the purpose of fulfilling a functionality herein described, the transmission connector device and/or the transmission connector and/or the system may comprise a number of respective elements, structural components and/or units and/or method steps that differs from the number mentioned herein. Furthermore, regarding the value ranges mentioned in this disclosure, values within the limits mentioned are to be understood to be also disclosed and to be used as applicable.

### Drawings

Further advantages may become apparent from the following description of the drawings. In the drawings two exemplary embodiments of the invention are shown. The drawings, the description and the claims contain a plurality of features in combination. The person having ordinary skill in the art will purposefully also consider the features separately and will find further expedient combinations.

It is shown in:
- Fig. 1: a schematic view of a system comprising a transmission connector device and a cooperating unit for cooperating with the transmission connector device,
- Fig. 2: a sectional view of the system according to figure 1,
- Fig. 3: an exploded view of the system according to figure 1,
- Fig. 4: a latching unit of the transmission connector device,
- Fig. 5: an actuation unit and a holding unit of the transmission connector device,
- Fig. 6: another detail view of the actuation unit and a holding unit according to figure 5,
- Fig. 7: a releasement mechanism for releasing the transmission connector device from the cooperation unit,
- Fig. 8: a comparison of the transmission connector device in a connected position and in a disconnected position,
- Fig. 9: a transmission connector comprising a transmission connector device in a second embodiment,
- Fig. 10: a detail view of an actuation unit of the transmission connector device according to figure 9 and
- Fig. 11: a detail view of a locking unit of the transmission connector device according to figure 9.

### Description of the two exemplary embodiments

If there is more than one specimen of a certain object, only one of these is given a reference sign in the figures and in the description. The description of this specimen may be correspondingly transferred to the other specimens of the object.

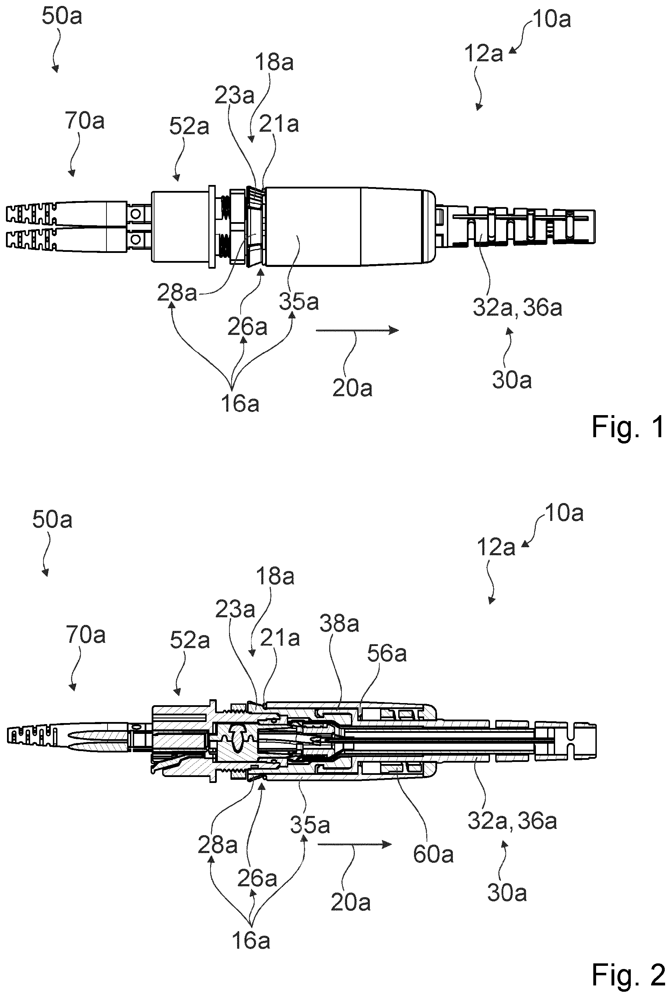

Figure 1 schematically shows a system 50a comprising a transmission connector device 12a and a cooperating unit 52a for connecting with at least the transmission connector device 12a. The transmission connector device 12a is part of a transmission connector 10a, which accordingly belongs to the system 50a. The system 50a is embodied as a transmission system for data and/or power. In this present case, the system 50a is exemplary embodied as an optical fiber system. Further, in this case the transmission connector 10a is embodied as a data transmission connector, for example as an optical fiber connector. Moreover, in this case the transmission connector device 12a is accordingly embodied as a data transmission connector device, for example as an optical fiber connector device. The whole system 50a is intended to a use in a harsh environment.

The connecting unit 52a is embodied as an adapter unit and is configured for connecting the transmission connector device 12a with at least one further transmission connector device 70a (cf. figures 1 to 3). The further transmission connector device 70a is part of the system 50a. In the present case, two further transmission connector devices 70a are shown but only one of them is marked with a reference sign. The cooperating unit 52a is intended to establish at least a safe and/or secure connection between the transmission connector device 12a with the further transmission connector device 70a, wherein the cooperating unit 52a is intended to the at least safe and/or secure connection in the harsh environment.

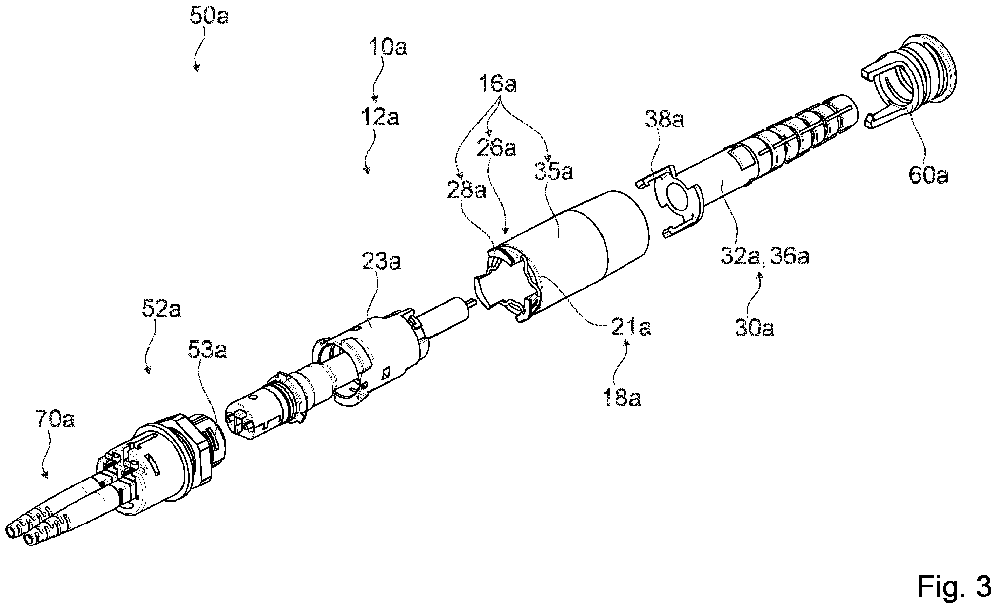

For latching with the cooperating unit 52a the transmission connector device 12a comprises a latching unit 18a. Further, the transmission connector device 12a comprises an actuation unit 16a for actuating the latching unit 18a by pulling along an axial direction 20a and thereby transferring the latching unit 18a from a latch position into a release position. In this context, the latch position is to be understood as a position, in which the latching unit 18a latches the transmission connector device 12a with the cooperating unit 52a (cf. figures 1 to 3). Herein, the cooperating unit 52a has at least one recess 53a for receiving at least part of the latching unit 18a. Under the release position a position is to be understood, in this context, in which the latch between the transmission connector device 12a and the cooperating unit 52a is released. Before going into detail on the releasement mechanism for releasing the connection between the transmission connector device 12a and the cooperating unit 52a, the design of the transmission connector device 12a will be explained first. Figures 1 to 3 show the whole system 50a, wherein figure 2 is a sectional view of the system 50a according to figure 1 and figure 3 is an exploded view of the system 50a according to figure 1.

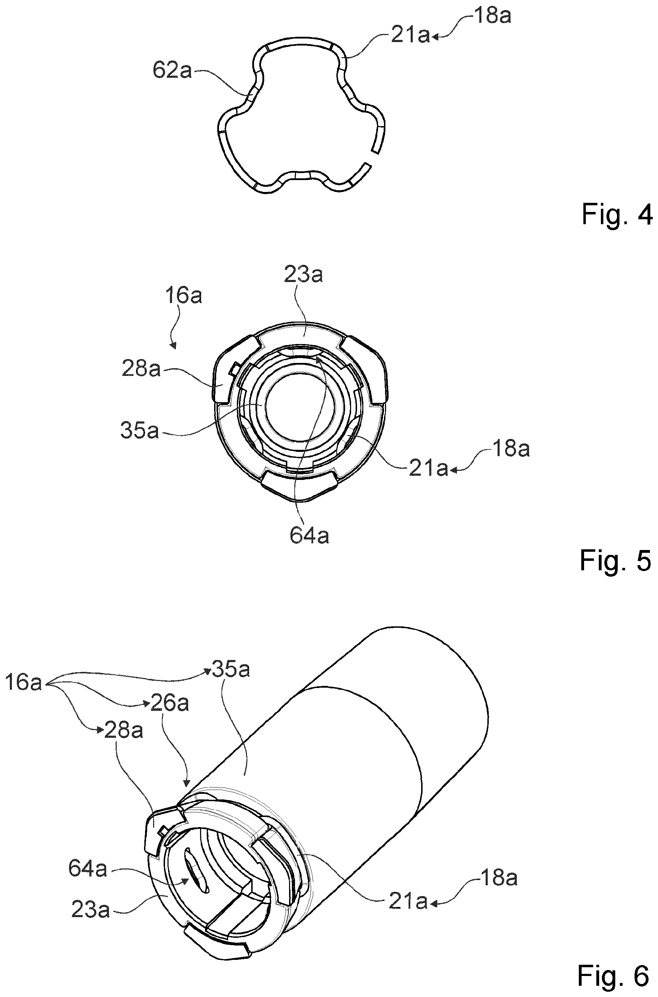

In figure 4 the latching unit 18a is shown in detail. The latching unit 18a comprises an at least partially ring-shaped spring element 21a. The spring element 21a is made in a one-piece embodiment. Figure 4 demonstrates that the spring element 21a is embodied as a wire clip. It can be possible that the wire clip is closed but in the present case, the spring element 21a is embodied as a C-shaped wire clip. The spring element 21a has only one opening. Further, it is shown in figure 4 that the spring element 21a has at least one concave hollow 62a in his shape along a circumferential direction of the spring element 21a. In this case, the spring element 21a has three concave hollows 62a in this shape.

The transmission connector device 12a comprises a holding unit 23a for holding the latching unit 18a with respect to the axial direction 20a in relation to the actuation unit 16a. For better understanding figures 5 and 6 show a detailed view of the actuation unit 16a, the latching unit 18a and the holding unit 23a and their arrangement relative to each other.

The holding unit 23a is configured for holding the latching unit 18a on one side opposite to the actuation unit 16a. The holding unit 23a and the actuation unit 16a hold the latching unit 18a at least in sections on opposite sides of the latching unit 18a (cf. figures 5 and 6). Figures 5 and 6 show that the holding unit 23a has at least one hole 64a which is configured for receiving the latching unit 18a, namely the spring element 21a. In this exemplary case, the holding unit 23a has three holes 64a for receiving the spring element 21a at least in sections. The holes 64a are embodied identical to each other. The concave hollow 62a of the spring element 21a is arrangeable in the hole 64a (cf. figures 5 and 6). In the latch position the latching unit 18a, namely the spring element 21a extends through at least the hole 64a and inserts in the recess 53a of the cooperating unit.

Furthermore, the actuation unit 16a comprises at least one channel 26a, in which the latching unit 18a is partially arranged, and an actuation element 35a, which at least partially delimits the channel 26a. In the present case, the actuation unit 16a comprises at least three channels 26a in a circumferential direction of the actuation unit 16a. The channels 26a are embodied identical to each other. The holding unit 23a and the actuation element 35a hold the latching unit18a, namely the spring element 21a, at least in sections on opposite sides of the latching unit 18a. Figures 5 and 6 show that in circumferential direction of the actuation unit 16a the channel 26a and the holding unit 23a are arranged side-by-side. In the circumferential direction of the actuation unit 16a the at least three channels 26a and the holding unit 23a are arranged in alternation.

The actuating unit 16a comprises at least one guiding element 28a which is configured to stretch the latching unit 18a by pulling the actuation unit 16a. In this exemplary case, the actuating unit 16a comprises at least three guiding elements 28a. The guiding element 28a at least partially delimits the channel 26a. The guiding element 28a is intended for holding the latching unit 18a in the channel 26a at least in the latch position. The guiding element 28a and the actuation element 35a hold the latching unit 18a, namely the spring element 21a, in the channel 26a at least in sections on opposite sides of the latching unit 18a. The actuation element 35a and the guiding element 28a are arranged on opposite sides of the channel 26a for delimiting the channel 26a (cf. figures 2, 5 and 6).

For locking the actuation unit 16a in a locked position and for preventing actuation of the actuation unit 16a in the locked position, the transmission connector device comprises a locking unit 30a. The locking unit 30a prevents a relative movement of the actuation unit 16a along the axial direction 20a. For transferring the actuation unit 16a from the locked position unit into an unlocked position the locking unit 30a comprises an operating element 32a which is rotatable. The transmission connector device 12a comprises a cable boot unit 36a. In this exemplary embodiment the cable boot unit 36a forms at least partially the operating element 32a (cf. figures 1 to 3, 7 and 8). Further the transmission connector device 12a comprises an elastic element 60a, which will be described more in detail below (cf. figures 2, 3, 7 and 8).

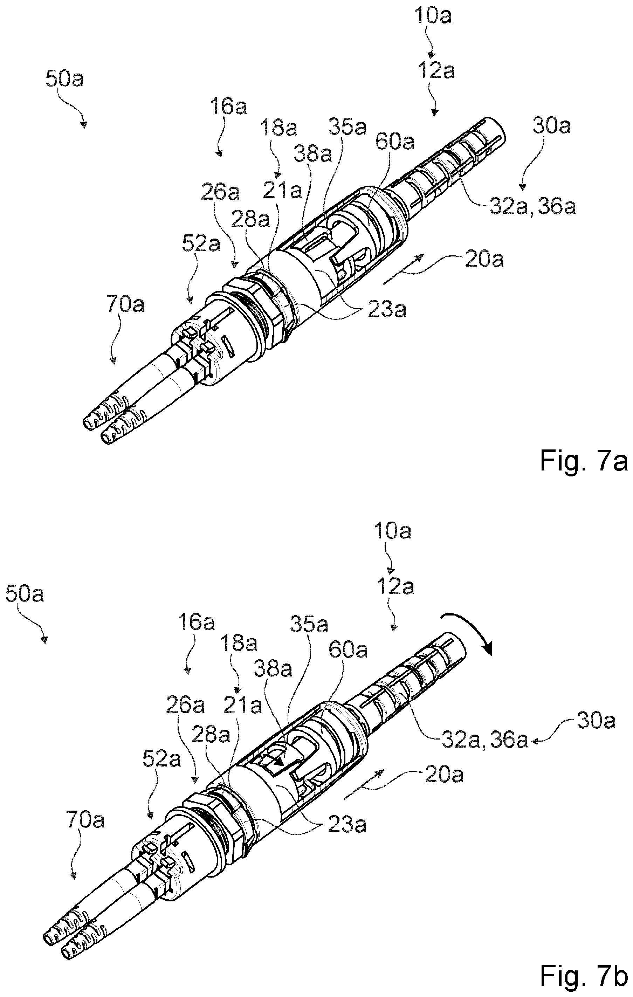

In the following the releasement mechanism for releasing the connection between the transmission connector device 12a and the cooperating unit 52a should be explained more in detail. Figure 7a to 7d show four steps of the releasement mechanism. For a better understanding, the actuation element 53a is cut open to show the interior of the actuation unit 16a and to reveal a connection between the actuation unit 16a, the holding unit 23a and the locking unit 30.

In figure 7a the transmission connector device 12a is in a connected position with the cooperating unit 53a. Further, the latching unit 18a is in the latch position. Moreover, the actuation unit 16a is in the locked position. The locking unit 30a prevents the relative movement of the actuation unit 16a along the axial direction 20a. In the locked position the operating element 32a is connected to the holding unit 23a with respect to the axial direction 20a. The operating element 32a comprises at least one fixating arm 38a. In this exemplary embodiment, the operating element 32a comprises at least two fixating arms 38a (cf. figures 2, 3 and 7). The fixating arm 38a is snaped with the holding unit 23a in the locked position. Figure 7a shows that the elastic element 60a is connected, namely snaped with the holding unit 23a. This fixation exists in in the locked position and unlocked position of the actuation unit 16a. Further, the cable boot unit 36a is fixed to the holding unit 23a with respect to the axial direction 20a.

First, for transferring the actuation unit 16a from the locked position into the unlocked position the operating element 32a, in this case the cable boot unit 36a, is rotatable (cf. figure 7b). A user and/or installer should turn/rotate the operating element 32a first for unlocking the actuation unit 16a. Figure 7b shows the actuation unit 16a in the unlocked position. By rotating the operating element 32a, at least the fixating arm 38a is disengaged with the holding unit 23a. Figure 7b still shows the latching unit 18a in the latch position.

For transferring the latching unit 18a from the latch position into the release position the actuation unit 16a has to be pulled along the axial direction 20a. By the expression, "pulling the actuation unit 16a along the axial direction 20a" can be understood that the user and/or installer pulls the actuation unit 16a itself along the axial direction 20a. In this present case, it should be understood that the user and/or installer pulls another unit and/or element of the transmission connector device 12a which is connected to the actuation unit 16a and pulls thereby the actuation unit 16a along the axial direction 20a. In this exemplary embodiment, the user and/or installer should pull the operating element 32a, namely the cable boot unit 36a. Due to the connection of the operating element 32a with the holding unit 23a and/or the actuation unit 16a, pulling the operating element 32a along the axial direction 20a causes the actuation unit 16a to be pulled.

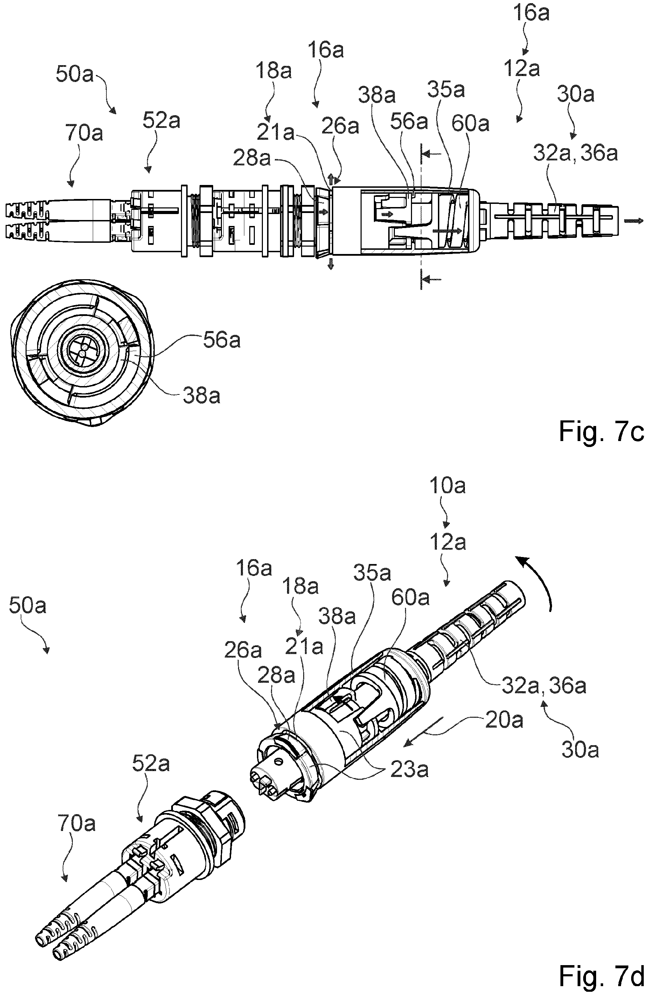

The actuation unit 16a, namely the actuation element 35a has at least one bar-shaped element 56a, which extends only partially along the circumferential direction of the actuation unit16a. In this case, the actuation unit 16a hast at least two bar-shaped elements 56a. In at least the unlocked position the fixating arm 38a contacts the bar-shaped element 56a. The fixating arm 38a rests against the bar-shaped element 56a viewed along the axial direction 20a. By pulling the cable boot unit 36a, the fixating arm 38a is pushing against the bar-shaped element 56a and thereby the actuation unit 16a can be moved and/or actuated also along the axial direction 20a. By means of arrows the direction of movement for transferring the latching unit 18a into the release position of the latching unit 18a is schematically shown in figure 7c.

In the release position the latching unit 18a is deformed so that the latch is released. For stretching the latching unit 18a the guiding element 28a is movable at least partially under the latching unit 18a by pulling the actuating unit 16a. If the latching unit 18a is in the released position the transmission connector device 12a can be completely disconnected from the cooperating unit 52a, namely by pulling the operating element 32a along the axial direction 20a.

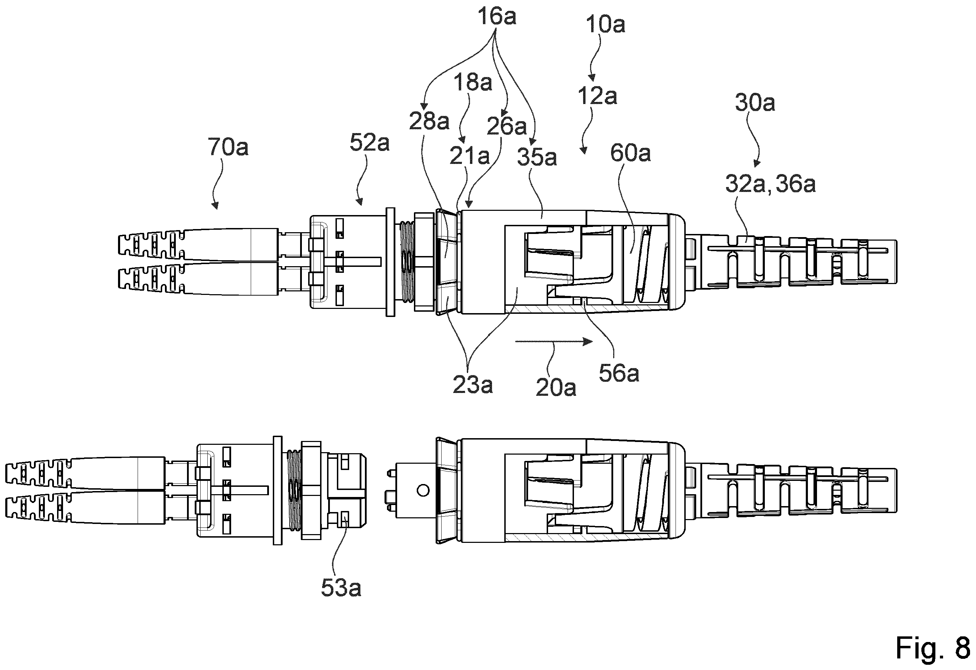

After a disconnection between the transmission connector device 12a and the cooperating unit 52a, the elastic element 60a is intended for automatically transferring back at least the actuation unit 16a from the unlocked position into the locked position. Further, the elastic element 60a is also intended for automatically transferring the latching unit 18a into a rest position. Figure 7d shows a disconnected position of the transmission connector device 12a. Moreover, figure 7d clarifies, that the latching unit 18a is in the rest position in a same position/orientation as in the latch position relative to the actuation unit 16a, wherein the latching unit 18a is free of contact with the cooperation unit 52a in the rest position. According to this embodiment, figure 8 should show a comparison of the transmission connector device 12a in the connected position and in the disconnected position. In the connected position the latching unit 18a is in the latch position. In the disconnected position the latching unit 18a is in the rest position.

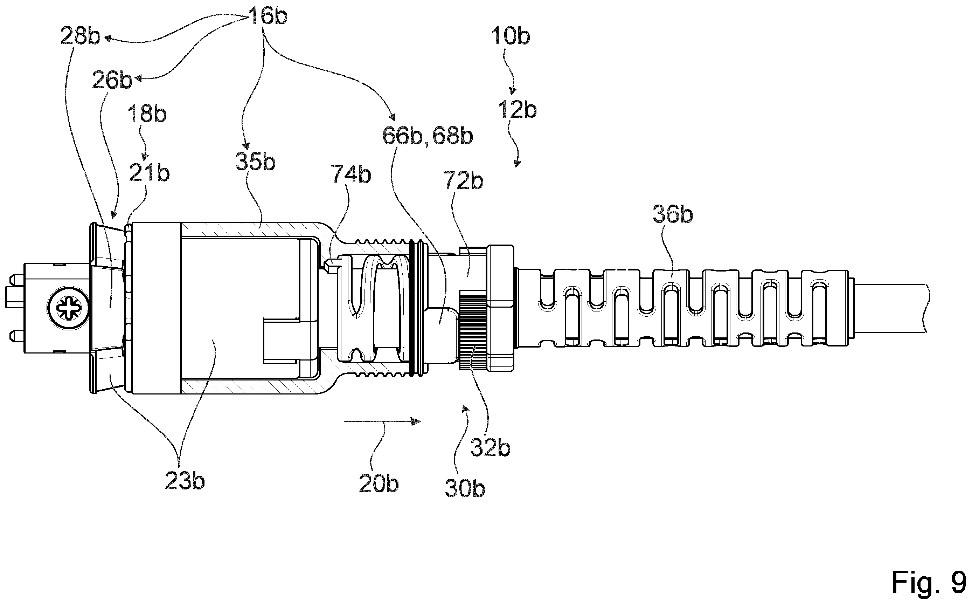

Figures 9 to 11 show a further exemplary embodiment of the invention. The following description is substantially limited to the differences between the exemplary embodiments, wherein regarding structural elements, features and functions that remain the same the description of the other exemplary embodiment, in particular the exemplary embodiment of figures 1 to 8, may be referred to. For distinguishing the exemplary embodiments, the letter a of the reference signs in the exemplary embodiment of figures 1 to 8 has been substituted by the letter b in the reference signs of the further exemplary embodiment of figures 9 to 11. Regarding structural elements having the same denomination, namely regarding structural elements having the same reference signs, principally the drawing and/or the description of the other exemplary embodiment, in particular of the exemplary embodiment of figures 1 to 8, may be referred to.

Figure 9 shows a transmission connector 10b having a transmission connector device 12b. The transmission connector 10b is part of a system 50b which comprises a connecting unit 52b for connecting with at least the transmission connector device 12b (the whole system 50b comprising the connecting unit 52b is not shown in this embodiment). The transmission connector device 12b comprises an actuation unit 16b and a locking unit 30b for locking the actuation unit 16b in a locked position and for preventing actuation of the actuation unit 16b in the locked position. The locking unit 30b comprises an operating element 32b which is rotatable for transferring the actuation unit 16b from the locked position into an unlocked position. The exemplary embodiment b of figures 9 to 11 differs from the preceding exemplary embodiment a at least substantially by the implementation of the locking unit 30b. In this present case, a releasement mechanism, namely a locking mechanism is semi-automatic.

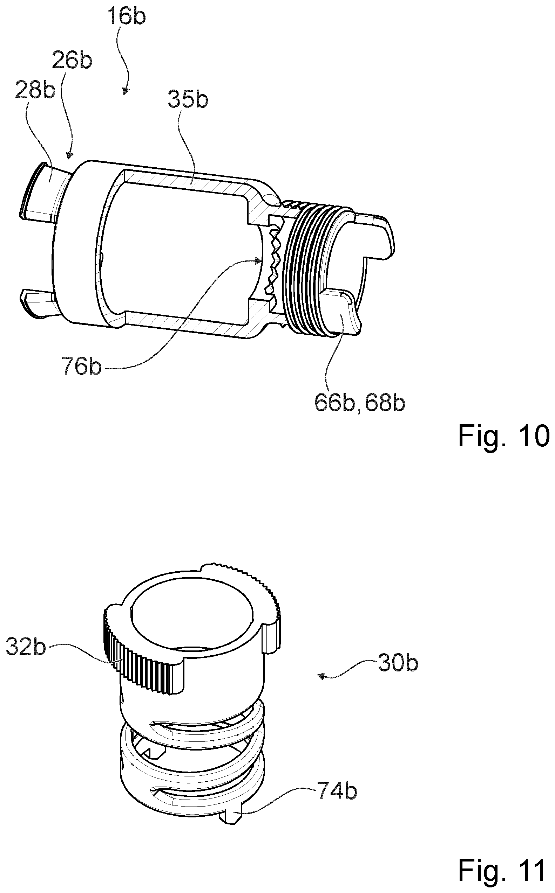

The actuation unit 16b comprises at least one abutment element 66b, which in the locked position abuts against the operating element 32b thereby preventing actuation of the actuation unit 16b. In this present embodiment, an actuation element 35b of the actuation unit comprises the abutment element 66b. The abutment element 66b is embodied as an annex 68b which extends only partially along a circumferential direction of the actuation unit 16b. Figure 10 shows a detailed view of the actuation unit 16b, which is cut open in sections for a better view inside the actuation unit 16. In this case, the actuation unit 16b comprises at least two abutment elements 66b which extend only partially along a circumferential direction of the actuation unit 16b.

The locking unit 30b comprises at least one recess 72b, into which the abutment element 66b is moveable when actuating the operating element 32b. In this present embodiment, the actuation unit 16b has to be pulled along the axial direction 20b. A user and/or installer can pull the actuation unit 16b itself along the axial direction 20b for transferring a latching unit 18b of the transmission connector device 12b from a latch position into a release position. By pulling the actuation unit 16b, namely the actuation element 35b, the abutment element 66b is movable into the recess 72b. In this present exemplary embodiment b, in contradiction to embodiment a, there is no spring element for automatically transferring back at least the actuation unit from the unlocked position into the locked position.

The locking unit 30b comprises a guidance element 74b for guiding the user and/or installer regarding locking and/or unlocking of the actuation unit 16b (cf. figure 11). The actuation unit 16b comprises at least one guidance rail 76b (cf. figure 10), in which the guidance element 74b is inserted for guiding the user and/or installer regarding locking and/or unlocking of the actuation unit 16b. By rotation the operating element 32b, the guidance element 74b is movable and/or rotatable along the guidance rail 76b.

### Reference numerals

- 10: transmission connector
- 12: transmission connector device
- 16: actuation unit
- 18: latching unit
- 20: axial direction
- 21: spring element
- 23: holding unit
- 26: channel
- 28: guiding element
- 30: locking unit
- 32: operating element
- 35: actuation element
- 36: cable boot unit
- 38: fixating arms
- 50: system
- 52: cooperating unit
- 53: recess
- 56: bar-shaped element
- 60: elastic element
- 62: hollows
- 64: hole
- 66: abutment element
- 68: annex
- 70: further transmission connector device
- 72: recess
- 74: guidance element
- 76: guidance rail

## Claims

1. Transmission connector device (12a-b) comprising a latching unit (18a-b) and an actuation unit (16a-b), wherein the actuation unit (16a-b) is configured to actuate the latching unit (18a-b) by pulling along an axial direction (20a-b) and thereby transferring the latching unit (18a-b) from a latch position into a release position, wherein the latching unit (18a-b) comprises an at least partially ring-shaped spring element (21a-b), **characterized in that** the actuating unit (16a-b) comprises at least one guiding element (28a-b) which is configured to stretch the latching unit (18a-b) by pulling the actuation unit (16a-b).

2. Transmission connector device (12a-b) according to claim 1, **characterized in that** the spring element (21a-b) is embodied as a wire clip.

3. Transmission connector device (12a-b) according to claim 2, **characterized in that** the spring element (21a-b) is embodied as a C-shaped wire clip.

4. Transmission connector device (12a-b) according to any one of the preceding claims, **characterized by** a holding unit (23a-b) for holding the latching unit (18a-b) with respect to the axial direction (20a-b) in relation to the actuation unit (16a-b).

5. Transmission connector device (12a-b) according to any one of the preceding claims, **characterized in that** the actuation unit (16a-b) comprises at least one channel (26a-b), in which the latching unit (18a-b) is partially arranged, and an actuation element (35a-b), which at least partially delimits the channel (26a-b).

6. Transmission connector device (12a-b) according to claim 5, **characterized in that** the guiding element (28a-b) at least partially delimits the channel (26a-b).

7. Transmission connector device (12a-b) according to claim 1 or 6, **characterized in that** the guiding element (28a-b) is movable at least partially under the latching unit (18a-b) by pulling the actuating unit (16a-b).

8. Transmission connector device (12a-b) according to any one of the preceding claims, **characterized by** a locking unit (30a-b) for locking the actuation unit (16a-b) in a locked position and for preventing actuation of the actuation unit (16a-b) in the locked position.

9. Transmission connector device (12a-b) according to claim 8, **characterized in that** the locking unit (30a-b) prevents a relative movement of the actuation unit (16a-b) along the axial direction (20a-b).

10. Transmission connector device (12a-b) according to claim 8 or 9, **characterized in that** the locking unit (30a-b) comprises an operating element (32a-b) which is rotatable for transferring the actuation unit (16a-b) from the locked position into an unlocked position.

11. Transmission connector device (12a-b) at least according to claims 4 and 10, **characterized in that** in the locked position the operating element (32a-b) is connected to the holding unit (23a-b) with respect to the axial direction (20a-b).

12. Transmission connector device (12a) according to claim 10 or 11, **characterized by** a cable boot unit (36a), which at least partially forms the operating element (32a).

13. Transmission connector device (12a) according to claim 12, **characterized in that** the cable boot unit (36a) is fixed to the actuation unit (16a) with respect to the axial direction (20a).

14. Transmission connector device (12a) according to any one of the claims 8 to 13, **characterized by** an elastic element (60a) for transferring back at least the actuation unit (16a) from the unlocked position into the locked position.

15. Transmission connector device (12a) according to claim 14, **characterized in that** the elastic element (60a) is configured for transferring the latching unit (18a) into a rest position.

16. Transmission connector device (12b) according to any one of claims 8 to 11, **characterized in that** the actuation unit (16b) comprises at least one abutment element (66b), which in the locked position abuts against the operating element (32b) thereby preventing actuation of the actuation unit (16b).

17. Transmission connector device (12b) according to claim 16, **characterized in that** the abutment element (66b) is embodied as an annex (68b) which extends only partially along a circumferential direction of the actuation unit (16b).

18. Transmission connector device (12b) according to claim 17, **characterized in that** the locking unit (30b) comprises at least one recess (72b), into which the abutment element (66b) is moveable when actuating the operating element (32b).

19. Transmission connector (10a-b) comprising a transmission connector device (12a-b) according to any one of the preceding claims.

20. System (50a-b) comprising a transmission connector device (12a-b) according to any one of claims 1 to 18 and a cooperating unit (52a-b) for connecting with the transmission connector device (12a-b), wherein the cooperating unit (52a-b) having at least one recess (53a-b) for receiving at least part of the latching unit (18a-b).

## Patentansprüche

1. Getriebeverbindervorrichtung (12a-b) aufweisend eine Rasteinheit (18a-b) und eine Betätigungseinheit (16a-b), wobei die Betätigungseinheit (16a-b) dazu vorgesehen ist, die Rasteinheit (18a-b) durch Ziehen entlang einer Axialrichtung (20a-b) zu betätigen und dadurch die Rasteinheit (18a-b) von einer Rastposition in eine Freigabeposition zu überführen, wobei die Rasteinheit (18a-b) ein zumindest teilweise ringförmiges Federelement (21a-b) aufweist, **dadurch gekennzeichnet, dass** die Betätigungseinheit (16a-b) zumindest ein Führungselement (28a-b) aufweist, das dazu vorgesehen ist, die Rasteinheit (18a-b) durch Ziehen an der Betätigungseinheit (16a-b) zu strecken.

2. Getriebeverbindervorrichtung (12a-b) nach Anspruch 1, **dadurch gekennzeichnet, dass** das Federelement (21a-b) als Drahtbügel ausgebildet ist.

3. Getriebeverbindervorrichtung (12a-b) nach Anspruch 2, **dadurch gekennzeichnet, dass** das Federelement (21a-b) als C-förmiger Drahtbügel ausgebildet ist.

4. Getriebeverbindervorrichtung (12a-b) nach einem der vorhergehenden Ansprüche, **gekennzeichnet durch** eine Halteeinheit (23a-b) zum Halten der Rasteinheit (18a-b) bezüglich der Axialrichtung (20a-b) in Bezug auf die Betätigungseinheit (16a-b).

5. Getriebeverbindervorrichtung (12a-b) nach einem der vorhergehenden Ansprüche, **dadurch gekennzeichnet, dass** die Betätigungseinheit (16a-b) zumindest einen Kanal (26a-b), in dem die Rasteinheit (18a-b) teilweise angeordnet ist, und ein Betätigungselement (35a-b), das den Kanal (26a-b) zumindest teilweise begrenzt, aufweist.

6. Getriebeverbindervorrichtung (12a-b) nach Anspruch 5, **dadurch gekennzeichnet, dass** das Führungselement (28a-b) den Kanal (26a-b) zumindest teilweise begrenzt.

7. Getriebeverbindervorrichtung (12a-b) nach Anspruch 1 oder 6, **dadurch gekennzeichnet, dass** das Führungselement (28a-b) durch Ziehen an der Betätigungseinheit (16a-b) zumindest teilweise unter die Rasteinheit (18a-b) bewegbar ist.

8. Getriebeverbindervorrichtung (12a-b) nach einem der vorhergehenden Ansprüche, **gekennzeichnet durch** eine Verriegelungseinheit (30a-b) zum Verriegeln der Betätigungseinheit (16a-b) in einer verriegelten Position und zum Verhindern einer Betätigung der Betätigungseinheit (16a-b) in der verriegelten Position.

9. Getriebeverbindervorrichtung (12a-b) nach Anspruch 8, **dadurch gekennzeichnet, dass** die Verriegelungseinheit (30a-b) eine Relativbewegung der Betätigungseinheit (16a-b) entlang der Axialrichtung (20a-b) verhindert.

10. Getriebeverbindervorrichtung (12a-b) nach Anspruch 8 oder 9, **dadurch gekennzeichnet, dass** die Verriegelungseinheit (30a-b) ein Bedienelement (32ab) aufweist, das zum Überführen der Betätigungseinheit (16a-b) von der verriegelten Position in eine entriegelte Position drehbar ist.

11. Getriebeverbindervorrichtung (12a-b) zumindest nach den Ansprüchen 4 und 10, **dadurch gekennzeichnet, dass** das Bedienelement (32a-b) in der verriegelten Position bezüglich der Axialrichtung (20a-b) mit der Halteeinheit (23a-b) verbunden ist.

12. Getriebeverbindervorrichtung (12a) nach Anspruch 10 oder 11, **gekennzeichnet durch** eine Kabelschuheinheit (36a), die zumindest teilweise das Bedienelement (32a) bildet.

13. Getriebeverbindervorrichtung (12a) nach Anspruch 12, **dadurch gekennzeichnet, dass** die Kabelschuheinheit (36a) bezüglich der Axialrichtung (20a) an der Betätigungseinheit (16a) fixiert ist.

14. Getriebeverbindervorrichtung (12a) nach einem der Ansprüche 8 bis 13, **gekennzeichnet durch** ein elastisches Element (60a) zum Zurücküberführen zumindest der Betätigungseinheit (16a) von der entriegelten Position in die verriegelte Position.

15. Getriebeverbindervorrichtung (12a) nach Anspruch 14, **dadurch gekennzeichnet, dass** das elastische Element (60a) zum Überführen der Rasteinheit (18a) in eine Ruheposition vorgesehen ist.

16. Getriebeverbindervorrichtung (12b) nach einem der Ansprüche 8 bis 11, **dadurch gekennzeichnet, dass** die Betätigungseinheit (16b) zumindest ein Anschlagelement (66b) aufweist, das in der verriegelten Position an dem Bedienelement (32b) anliegt und dadurch eine Betätigung der Betätigungseinheit (16b) verhindert.

17. Getriebeverbindervorrichtung (12b) nach Anspruch 16, **dadurch gekennzeichnet, dass** das Anschlagelement (66b) als Ansatz (68b) ausgebildet ist, der sich nur teilweise entlang einer Umfangsrichtung der Betätigungseinheit (16b) erstreckt.

18. Getriebeverbindervorrichtung (12b) nach Anspruch 17, **dadurch gekennzeichnet, dass** die Verriegelungseinheit (30b) zumindest eine Ausnehmung (72b) aufweist, in die das Anschlagelement (66b) beim Betätigen des Bedienelements (32b) bewegbar ist.

19. Getriebeverbinder (10a-b), aufweisend eine Getriebeverbindervorrichtung (12a-b) nach einem der vorhergehenden Ansprüche.

20. System (50a-b) aufweisend eine Getriebeverbindervorrichtung (12a-b) nach einem der Ansprüche 1 bis 18 und eine Zusammenwirkungseinheit (52a-b) zum Verbinden mit der Getriebeverbindervorrichtung (12a-b), wobei die Zusammenwirkungseinheit (52a-b) zumindest eine Ausnehmung (53a-b) zum Aufnehmen zumindest eines Teils der Rasteinheit (18a-b) aufweist.

## Revendications

1. Dispositif de connecteur de transmission (12a-b) comprenant une unité d'encliquetage (18a-b) et une unité d'actionnement (16a-b), où l'unité d'actionnement (16a-b) est prévue pour actionner l'unité d'encliquetage (18a-b) en tirant le long d'une direction axiale (20a-b) et en transférant ainsi l'unité d'encliquetage (18a-b) d'une position d'encliquetage à une position de libération, où l'unité d'encliquetage (18a-b) comprend un élément de ressort au moins partiellement annulaire (21a-b), **caractérisé en ce que** l'unité d'actionnement (16a-b) comprend au moins un élément de guidage (28a-b) qui est prévu pour étirer l'unité d'encliquetage (18a-b) en tirant l'unité d'actionnement (16a-b).

2. Dispositif de connecteur de transmission (12a-b) selon la revendication 1, **caractérisé en ce que** l'élément de ressort (21a-b) est réalisé sous la forme d'une pince en fil métallique.

3. Dispositif de connecteur de transmission (12a-b) selon la revendication 2, **caractérisé en ce que** l'élément de ressort (21a-b) est réalisé sous la forme d'un clip en fil métallique en forme de C.

4. Dispositif de connecteur de transmission (12a-b) selon l'une quelconque des revendications précédentes, **caractérisé par** une unité de retenue (23a-b) pour retenir l'unité d'encliquetage (18a-b) par rapport à la direction axiale (20a-b) par rapport à l'unité d'actionnement (16a-b).

5. Dispositif de connecteur de transmission (12a-b) selon l'une quelconque des revendications précédentes, **caractérisé en ce que** l'unité d'actionnement (16a-b) comprend au moins un canal (26a-b) dans lequel l'unité d'encliquetage (18a-b) est disposée partiellement, et un élément d'actionnement (35a-b) qui délimite au moins partiellement le canal (26a-b).

6. Dispositif de connecteur de transmission (12a-b) selon la revendication 5, **caractérisé en ce que** l'élément de guidage (28a-b) délimite au moins partiellement le canal (26a-b).

7. Dispositif de connecteur de transmission (12a-b) selon la revendication 1 ou 6, **caractérisé en ce que** l'élément de guidage (28a-b) peut être déplacé au moins partiellement sous l'unité d'encliquetage (18a-b) en tirant l'unité d'actionnement (16a-b).

8. Dispositif de connecteur de transmission (12a-b) selon l'une quelconque des revendications précédentes, **caractérisé par** une unité de verrouillage (30a-b) pour verrouiller l'unité d'actionnement (16a-b) dans une position verrouillée et pour empêcher l'actionnement de l'unité d'actionnement (16a-b) dans la position verrouillée.

9. Dispositif de connecteur de transmission (12a-b) selon la revendication 8, **caractérisé en ce que** l'unité de verrouillage (30a-b) empêche un mouvement relatif de l'unité d'actionnement (16a-b) le long de la direction axiale (20a-b).

10. Dispositif de connecteur de transmission (12a-b) selon la revendication 8 ou 9, **caractérisé en ce que** l'unité de verrouillage (30a-b) comprend un élément d'actionnement (32a-b) qui peut tourner pour transférer l'unité d'actionnement (16a-b) de la position verrouillée à une position déverrouillée.

11. Dispositif de connecteur de transmission (12a-b) au moins selon les revendications 4 et 10, **caractérisé en ce que** dans la position verrouillée, l'élément d'actionnement (32a-b) est relié à l'unité de retenue (23a-b) par rapport à la direction axiale (20a-b).

12. Dispositif de connecteur de transmission (12a) selon la revendication 10 ou 11, **caractérisé par** une unité de gaine de câble (36a) qui forme au moins partiellement l'élément d'actionnement (32a).

13. Dispositif de connecteur de transmission (12a) selon la revendication 12, **caractérisé en ce que** l'unité de gaine de câble (36a) est fixée à l'unité d'actionnement (16a) par rapport à la direction axiale (20a).

14. Dispositif de connecteur de transmission (12a) selon l'une quelconque des revendications 8 à 13, **caractérisé par** un élément élastique (60a) pour transférer en retour au moins l'unité d'actionnement (16a) de la position déverrouillée à la position verrouillée.

15. Dispositif de connecteur de transmission (12a) selon la revendication 14, **caractérisé en ce que** l'élément élastique (60a) est prévu pour transférer l'unité d'encliquetage (18a) dans une position de repos.

16. Dispositif de connecteur de transmission (12b) selon l'une quelconque des revendications 8 à 11, **caractérisé en ce que** l'unité d'actionnement (16b) comprend au moins un élément de butée (66b) qui, dans la position verrouillée, bute contre l'élément d'actionnement (32b) et empêche ainsi l'actionnement de l'unité d'actionnement (16b).

17. Dispositif de connecteur de transmission (12b) selon la revendication 16, **caractérisé en ce que** l'élément de butée (66b) est réalisé sous la forme d'un appendice (68b) qui ne s'étend que partiellement le long d'une direction périphérique de l'unité d'actionnement (16b).

18. Dispositif de connecteur de transmission (12b) selon la revendication 17, **caractérisé en ce que** l'unité de verrouillage (30b) comprend au moins un évidement (72b) dans lequel l'élément de butée (66b) peut être déplacé lors de l'actionnement de l'élément d'actionnement (32b).

19. Connecteur de transmission (10a-b) comprenant un dispositif de connecteur de transmission (12a-b) selon l'une quelconque des revendications précédentes.

20. Système (50a-b) comprenant un dispositif de connecteur de transmission (12a-b) selon l'une quelconque des revendications 1 à 18 et une unité de coopération (52a-b) pour la liaison avec le dispositif de connecteur de transmission (12a-b), où l'unité de coopération (52a-b) présente au moins un évidement (53a-b) pour recevoir au moins une partie de l'unité d'encliquetage (18a-b).
